# EUROPEAN PATENT APPLICATION

(11) **EP 1 981 298 A1**
(43) Date of publication of application: **15.10.2008**
(21) Application number: 07706938.3
(22) Date of filing: 11.01.2007
(51) Int. Cl.: H04Q 7/34, H04M 3/56, H04Q 7/38

(54) **MOBILE COMMUNICATION SYSTEM, ITS TALKING METHOD, AND PROGRAM SOFTWARE**

(30) Priority: 12.01.2006 JP 2006004311
(71) Applicant: NEC Corporation, Minato-ku Tokyo 108-8001 (JP)
(72) Inventor: FUKASAKU, Masaki, Toyko 1088001 (JP)
(74) Representative: Vossius & Partner
(86) International application number: PCT/JP2007/050631
(87) International publication number: WO 2007/081047

(57) **Abstract**

A source portable terminal (41) notifies reception-side portable terminals (51, 61, 71) of location information data of the source portable terminal (41) via a server (21, 22), at the timing of starting PoC telephone call. The users of the reception-side portable terminals (51, 61, 71) are enabled to identify the destination user and to locate the user by displaying the received destination location information on a display, which reduces the burden on the source user. After that, each of the PoC calling parties (speakers) transmits location information data of its own to a portable terminal of another party, at the time starting telephone call.

## Description

### TECHNICAL FIELD:

The present invention relates to a mobile communication system, and a telephone calling method and a program for the same, and particularly to a mobile communication system, and a telephone calling method and a program suitable for mobile communication systems including PoC (Push-to-Talk over Cellular) telephone call systems.

### BACKGROUND ART:

PoC telephone call systems enabling one-to-several telephone call are known. These PoC telephone call systems are designed such that telehone call is performed by using portable terminals like transceivers. Specifically, in a PoC telephone callsystem, a calling party pushes a button to transmit telephone call to a PoC server controlling the mobile communication system, and the PoC server transmits this telephone call to a destination (other-party's) portable terminal.

Unlike the TV conference, one-to several PoC telephone call using portable telephones will suffer a problem as follows when a user talks with a person whom the user has not talked with before and whose name is unknown to the user. In other words, it is difficult to identify a speaker only with the speaker's voice and indication of the speaker's name on the display. Therefore, there is a demand among users to know, when participating in a conference attended by many other people or attended by unknown people, the identity of a source user (speaker) who is speaking.

The draft report "Feasibility of Originator Location Information Notification Function in Emergency Call from Portable Telephone" published by Ministry of Internal Affairs and Communications, Information and Communication Council on May 17, 2004, says "third-generation portable telephone terminals newly provided by mobile-service providers after April 2007 are in principle required to have a location information notification function based on the GPS positioning system". Accordingly, future portable telephone will have the location information notification function as a standard feature, and this location information notification function will be able to be utilized in emergency call.

Japanese Unexamined Patent Application Publication No. 2002-271839 (hereafter, referred to as "Patent Document 1") discloses an information management system in which a mobile portable terminal is used to notify a third party of a user's location. The technology described in Patent Document 1 aims at supporting two-way communication between users. When a user instructs his/her own mobile portable terminal to input his/her location information, the mobile portable terminal finds current location based on signals from GPS satellites, and transmits the location information to a server, whereby the user's current location is registered in the server. The server notifies a third party's mobile terminal device designated by the user whose current location has been registered of the user's current location thus registered.

Further, Japanese Unexamined Patent Application Publication No. 2002-261982 (hereafter, referred to as "Patent Document 2") discloses an emergency notification system designed to rapidly convey informant's location information or the like to a predetermined contact number or address. The informant carries a transmitter with him/her as well as a portable telephone unit. When the informant presses a switch of the transmitter in emergency, the transmitter transmits a trigger signal. Upon receiving the trigger signal, the portable telephone unit computes location information of the portable telephone unit based on a GPS signal. Subsequently, the portable telephone unit transmits the location information and other information such as the telephone number of the portable telephone unit to a management server via a telephone network. The management server transmits the location information and other information received from the portable telephone unit to a terminal device by means of push delivery.

Japanese Unexamined Patent Application Publication NO. 2005-234666 (corresponding to US Patent Application Publication 2005-025273-A1) (hereafter, referred to as "Patent Document 3") discloses a technology for recording communication contents in a PoC system. The PoC system disclosed in this Patent Document 3 records communication contents exchanged during each session in PoC group communication. The recording is performed only when it is determined that the recording is necessary. It is also possible to change whether or not the recording is performed for each speech. The communication contents are assigned with indexes by session identifiers or originator identifiers, so that communication content can be retrieved by designing a session or an originator.

It will be helpful if the desire for knowing identity of a calling party as mentioned in the above can be satisfied in a PoC telephone calling system by using the location information function provided in a portable terminal device having a location information notification function. In this regard, the technology described in Patent Document 1 can be utilized to preliminarily transmit the location information to all the participants in a conference so that the participants are able to determine the locations of other conference participants.

However, in the PoC (Push-to-Talk over Cellular) telephone call system in which conference participants perform telephone call with one another, it is difficult for them to identify a speaker only with the speaker's voice or display indication of his/her location information, if the speaker is a person whom they have not talked with before or whose name is unknown to them.

Patent Document 2 only discloses a technical idea for rapidly conveying an informant's location information or the like to a predetermined contact number or address, and does not disclose at all a technique for identifying a speaker in a conference.

Patent Document 3 only discloses a technical idea for enabling post-checking of communication contents, and like Patent Document 2, does not disclose at all a technique for identifying a speaker in a conference.

### DISCLOSURE OF THE INVENTION:

In view of the above, it is an object of the present invention to provide a mobile communication system for one-to-several communication using portable terminals in a PoC telephone call system, which enables more comfortable one-to-several communication by automatically notifying a destination of current location information of a source (speaker).

In order to achieve the object described above, a first aspect of the present invention relates to a mobile communication system including one source portable terminal, a plurality of destination portable terminals, and a server for controlling one-to-several telephone call performed between the source portable terminal and the plurality of destination portable terminals. The mobile communication system is characterized in that the source portable terminal includes: location information acquisition means for intermittently acquiring location information data of the source portable terminal from a location information notification service system; and transmission means for transmitting to the server the location information data of the source portable terminal acquired by the location information acquisition means, at the timing of starting the transmission, and each of the plurality of destination portable terminals includes: reception means for receiving the location information data from the server having received the location information data from the source portable terminal, at the timing of a session being established; and image display means for displaying on a screen thereof the location information of the source portable terminal based on the location information data.

A second aspect of the present invention also relates to mobile communication system including one source portable terminal, a plurality of destination portable terminals, and a server for controlling one-to-several telephone call performed between the source portable terminal and the plurality of destination portable terminals, and the mobile communication system of the second aspect is characterized in that the server includes: reception means for receiving from the source portable terminal location information data of the source portable terminal and information identifying a destination or a destination group, at the timing of starting the transmission; group management means for identifying telephone numbers of the destination portable terminals based on the information identifying the destination or the destination group; transmission means which transmits a session establishment request to the portable terminal with the identified destination telephone numbers and, when the reception means receives a signal in response to the session establishment request from the destination portable terminal, transmits the location information data received from the source portable terminal to the destination portable terminals; and a telephone call control unit for controlling telephone call between the source portable terminal and the plurality of destination portable terminals.

Further, a telephone calling method according to the present invention is for use in a mobile communication system including one source portable terminal, a plurality of destination portable terminals, and a server for controlling one-to-several telephone call performed between the source portable terminal and the plurality of destination portable terminals, and the method is characterized by including: a step in which the source portable terminal intermittently acquires location information data of its own from a location information notification service system; a step in which the source portable terminal transmits the acquired location information data of its own to the server at the timing of starting the transmission; a step in which the destination portable terminals receive the location information data from the server having received the location information data at the timing of a session being established; and a step in which the destination portable terminals display the location information of the source portable terminal on their screens based on the location information data.

Still further, program software according to the present invention is for a computer for operating portable terminals in a mobile communication system including one source portable terminal, a plurality of destination portable terminals, and a server for controlling one-to-several telephone call performed between the source portable terminal and the plurality of destination portable terminals, and the program software is characterized by causing the computer to execute the steps of: acquiring intermittently from a location information service system location information data of the source portable terminal; transmitting the acquired location information data of the source portable terminal to the server at the timing of starting the transmission; receiving the location information data from the server having received the location information data at the timing of a session being established; and displaying on a screen the location information of the source portable terminal based on the location information data.

In the mobile communication system, the telephone call method, and the program software according to the present invention, location information data of the user of a source portable terminal is automatically notified to the users of destination portable terminals without putting any burden on the user of the source portable terminal, whereby the users of the portable terminals are enabled to perform smooth and comfortable one-to-several telephone call.

According to a preferred embodiment of the present invention, the one-to-several telephone call as described above is utilized for PoC (Push-to-Talk over Cellular) telephone call, in which each PoC calling party transmits its own location information data at the same time with starting communication, and the location information is displayed on display devices of other-party's portable terminals. Employment of this configuration makes it easy for a recipient of a telephone call to identify who is making the current PoC call. Further, according to another preferred embodiment of the present invention, each portable terminal further has determination means which enables or disables transmission of location information by the transmission means at the timing of starting PoC telephone call, if the user wants to make an anonymous call.

### BRIEF DESCRIPTION OF THE DRAWINGS:

Fig. 1 is a block diagram showing configuration of a mobile communication system according to an embodiment of the present invention;
Fig. 2 is a block diagram showing configuration of a PoC telephone call system used in the mobile communication system shown in Fig. 1;
Fig. 3 is a block diagram showing configuration of a terminal device used in the mobile communication system shown in Fig. 1; and
Fig. 4 is a flowchart showing processing in the mobile communication system of Fig. 1.

### BEST MODE FOR CARRYING OUT THE INVENTION:

A best mode for carrying out the invention will be described in detail with reference to the accompanying drawings.

As described later, a mobile communication system including a PoC telephone call system according to an embodiment of the present invention comprises a PoC server, which is connected to portable terminals via base stations.

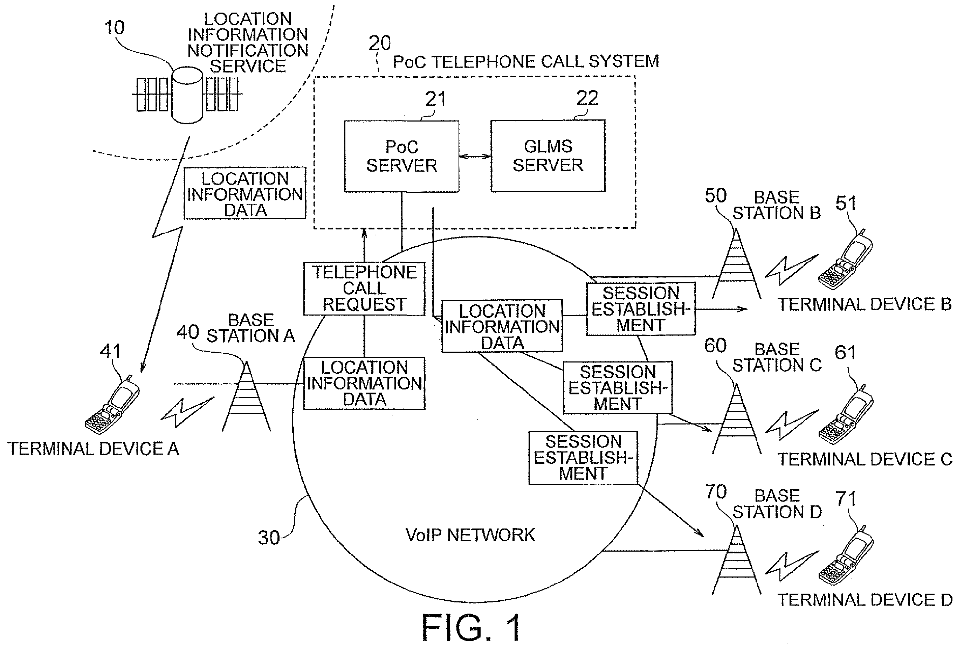

Fig. 1 is a block diagram showing a mobile communication system according to this embodiment. The illustrated mobile communication system comprises a location information notification service system 10, a PoC telephone call system 20, a VoIP (voice over internet protocol) network 30, and first through fourth portable terminals 41, 51, 61, 71 connected to the VoIP network 30.

The term VoIP as used herein means a technique in which voice data is transferred using IP (internet protocol) which is originally a data communication protocol for the purpose of realizing Internet telephone services.

Although description of this exemplary embodiment will be made in terms of a case in which four portable terminals are provided, it will be obviously understood that the number of the portable terminals is not limited to four. In Fig. 1, the first to fourth portable terminals 41, 51, 61, and 71 are represented as terminal device A, terminal device B, terminal device C, and terminal device D, respectively. The first portable terminal 41 (terminal device A) is a source terminal device, while the second to fourth portable terminals 51, 61, and 71 (terminal device B, terminal device C, and terminal device D) are destination terminal devices.

The location information notification service system 10 is a location information notification service system representing a GPS (global positioning system), and has a function to supply a signal for specifying a current position to each portable terminal. Although a satellite used in the GPS system is shown in Fig. 1, the location information notification service system 10 is not limited to the GPS system and may be any other service system as long as it has a location information notification function.

PoC communication system 20 comprises a PoC (Push-to-Talk over Cellular) server 21 and a GLMS (Group and List Management Server) server 22. The PoC communication system 20 provides one-to-one telephone call service or one-to-several telephone call service by cooperation between the PoC server 21 and the GLMS server 22 by way of the VoIP network 30. The PoC server 21 has a function to perform session management during telephone call. The GLMS server 22 has a function to perform management of communication groups.

The first portable terminal 41 (source terminal device A) is a portable terminal which notifies (transmits) location information data of its own. The second through fourth portable terminals 51, 61, 71 (destination terminal devices B, C, and D) are portable terminals which are notified of (receive) the location information data of the first portable terminal 41 (source terminal device A). The source and destination portable terminals are each provided with an application for notifying/setting the location information.

Base stations closest to and communicable with the first to fourth portable terminals 41, 51, 61, 71 (terminal device A, terminal device B, terminal device C, and terminal device D) are first through fourth base stations 40, 50, 60,70, respectively. In Fig. 1, the first through fourth base stations 40, 50, 60, 70 are represented as base station A, base station B, base station C, and base station D, respectively.

The first through fourth base stations 40, 50, 60, 70 are connected to one another via a VoIP network 30 that can be used by the first through fourth portable terminals 41, 51, 61, 71. PoC telephone call is realized by the PoC telephone call system 20 connected to this VoIP network 30. The PoC telephone call system 20 realizes one-to-one telephone call or one-to-several telephone call via an IP network by means of cooperation between the PoC (Push-to-Talk over Cellular) server 21 and the GLMS (Group and List Management Server) server 22. In this embodiment, the PoC server 21 has not only a function of communication control for establishing the PoC telephone call but also a function to notify a plurality of destination (reception-side) portable terminals of location information data of a source portable terminal. Further, when a PoC telephone call is then transmitted by an arbitrary portable terminal, the PoC server receives location information data of the sender terminal and transmits the same to a receiver portable terminal.

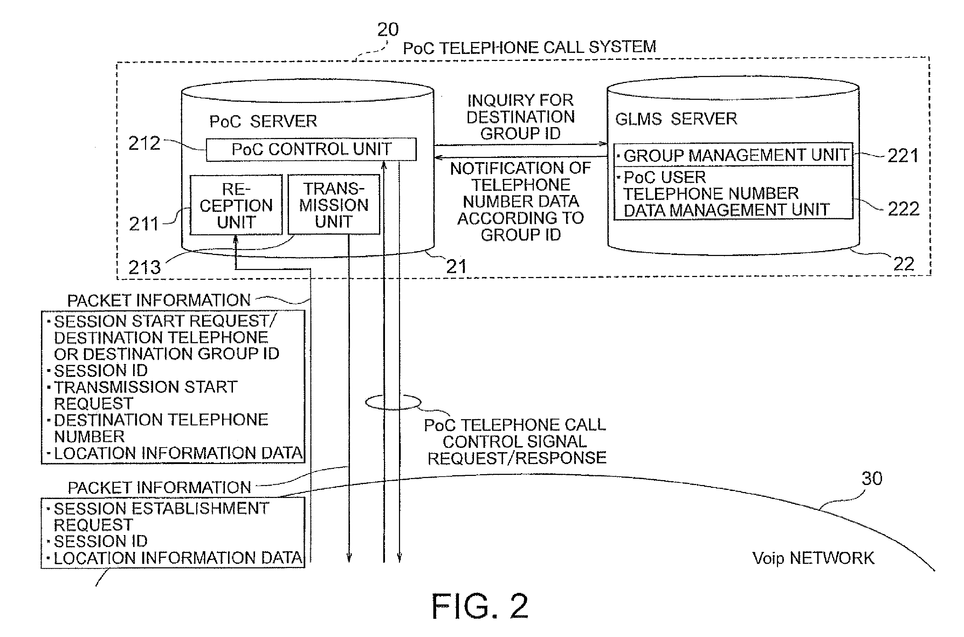

Referring to Fig. 2, the PoC telephone call system 20 will be described. The PoC server 21 comprises a reception unit 211, a PoC control unit 212, and a transmission unit 213. The GLMS server 22 comprises a group management unit 221 and a PoC user telephone number data management unit 222.

The reception unit 211 of the PoC server 21 receives packet information from the source portable terminal 41 via the VoIP network 30. This packet information contains a session start request/destination telephone or destination group ID, a session ID, a transmission start request, a source telephone number, and location information data. The PoC control unit 212 transmits and receives a PoC communication control signal request/response to and from the VoIP network 30. The PoC control unit 212 makes a destination group ID inquiry to the GLMS server 22. The group management unit 221 identifies the telephone number of the destination portable terminal based on this destination group ID inquiry (information for identifying the destination or destination group). The PoC user telephone number data management unit 222 manages data of PoC users' telephone numbers. The group management unit 221 notifies the PoC server 21 of telephone number data according to the group ID.

The transmission unit 213 of the PoC server 21 transmits packet information to the destination portable terminals 51, 61, 71 via the VolP network 30. This packet information contains a session establishment request, a session ID, and location information data. The reception unit 211 receives a signal in response to the session establishment request from the destination portable terminals 51, 61, 71. The PoC control unit 212 controls telephone call between the source portable terminal 41 and the destination portable terminals 51, 61, 71.

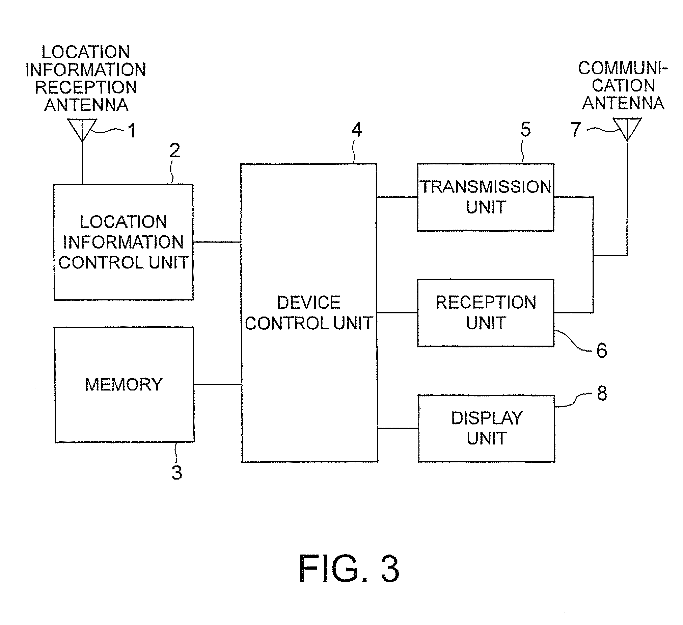

Fig. 3 is a block diagram showing configuration of a portable terminal used in the mobile communication system including the PoC telephone call system 20, illustrated in Fig. 1.

The portable terminal has a location information reception antenna 1, a location information control unit 2, a memory 3, a device control unit 4 for controlling the portable terminal as a whole, a transmission unit 5, a reception unit 6, a communication antenna 7, and a display unit 8.

The location information control unit 2 has an application for notifying and setting location information. The application has a function of controlling the location information reception antenna 1, a function of controlling data exchange with the location information notification service system 10 represented by GPS, and a function of generating location information data to deliver the same to the device control unit 4.

Although not shown, the device control unit 4 comprises a CPU (central processing unit), a cache memory, and an interruption controller. The position control unit 4 controls the portable terminal based on an OS (operating system) for controlling processing of the portable terminal as a whole. The device control unit 4 also selects, according to the user's selection, whether or not the location information data acquired by the location information control unit 2 is transmitted to the PoC server 21. The transmission unit 5 has functions to transmit a PoC telephone call start request via the communication antenna 7, to transmit location information data, and to perform VoIP voice telephone call (transmission). When the device control unit 4 determines to transmit location information data, the transmission unit 5 receives the location information data from the device control unit 4, and notifies the PoC server 21 of the received location information data together with information specifying the destination or information specifying the destination group, automatically at the timing of starting the PoC telephone call (communication request). This mobile communication system is capable of not only one-to-several PoC telephone call and PoC data communication but also one-to-one PoC telephone call and PoC data communication.

The reception unit 6 is for receiving PoC telephone call session establishment notification via the communication antenna 7, receiving location information data, and performing VoIP voice telephone call (reception). The reception unit 6 has functions to receive a PoC telephone call request from the PoC server 21 via the communication antenna 7, and to receive destination location information data from the PoC server 21, automatically at the timing of the session establishment notification. The display unit 8 has a function to display, on an image display device (not shown), location information represented by the location information data automatically received by the PoC server 21. The memory 3 includes a non-volatile region (ROM)/volatile region (RAM) to store a control OS and applications for the portable terminal as non-volatile data while temporarily storing necessary user data such as received data. The ROM also stores user setting data which is used for storing a determination flag determining whether or not the location information data is to be transmitted in the processing on the transmission side.

The location information of the destination is displayed on the displays of the other (source) portable terminals 51, 61, 71 by the location information data transmitted by the destination portable terminal 41 at the timing of the destination starting communication, whereby the portable terminals 51, 61, 71 are allowed to easily identify the source (speaker) whom they are now telephone calling or communicating with based on the location information. The location information may be displayed not only as a map but also by using lot numbers, place names, municipality names, building names, and other names used on maps. Each of the portable terminals 41, 51, 61, 71 transmits the own location information data to the portable terminal at the other end when performing telephone call or transmitting data therefrom. Therefore, the recipient is allowed to identify who is the current calling party (speaker). This enables comfortable PoC telephone call.

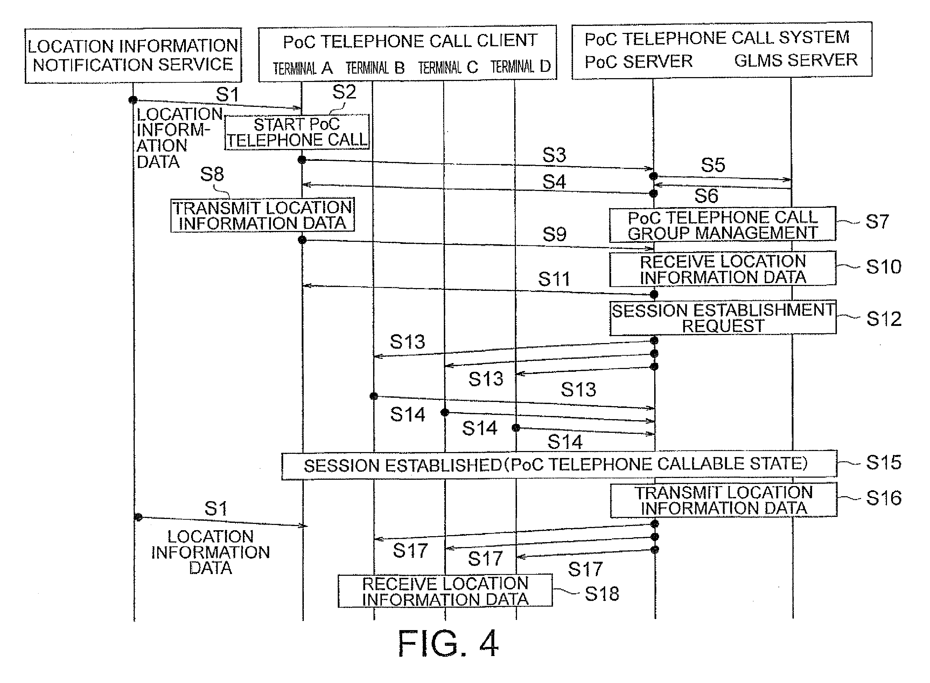

Fig. 4 shows a flowchart in the PoC telephone call system according to the embodiment described above. Fig. 4 shows the flow of processing in chronological order from the time when the first portable terminal 41 (terminal device A) starts PoC telephone call to the time when the position thereof is notified to the second through fourth portable terminals 51, 61, 71 (terminal devices B to D). Fig. 4 shows an example in which there are four PoC telephone call clients, and the first portable terminal 41 (transmission-side terminal A) performs PoC telephone call to the second through fourth portable terminals 51, 61, 71 (three reception-side terminals B, C, D) while at the same time notifying them of the location information of the transmission-side terminal A.

Servers for the PoC telephone call clients are composed of the PoC server 21 and the GLMS server 22. The first portable terminal 41 (transmission-side terminal A) as a PoC telephone call client periodically receives its own location information data from the location information notification service system 10 (step S1). When the first portable terminal 41 (transmission-side terminal A) as a PoC telephone call client performs operation to start PoC telephone call with the second through fourth portable terminals 51, 61, 71 (terminals B, C, D) (step S2), the first portable terminal 41 (terminal A) notifies the PoC server 21 of "telephone call request" and "PoC telephone call group list" information (step S3).

Upon normally receiving the above-mentioned "telephone call request" and the "PoC telephone call group list", the PoC server 21 notifies the GLMS server 22 of the "PoC telephone call group list" (step S5). The GLMS server 22 returns a reception response upon receiving the notification (step S6). After that, in the PoC telephone call system 20, the PoC server 21 and the GLMS server 22 cooperate with each other to perform PoC telephone call group management (step S7). Upon receiving the reception response from the GLMS server 22 (step S6), the PoC server 21 notifies the first portable terminal 41 (terminal A) of establishment of PoC telephone call group management (step S4). Triggered by this notification (step S4), the first portable terminal 41 (terminal A) performs processing to transmit location information data (step S8). When the location information data is transmitted by the first portable terminal 41 (terminal A) (step S9), the PoC server 21 receives the transmitted location information data (step S10), and returns a response thereto (step S11).

After replying to the location information data (step S11), the PoC server 21 proceeds to processing to request the second through fourth portable terminals 51, 61, 71 for session establishment (terminals B, C, D) (step S12), and transmits a session establishment request to the second through fourth portable terminals 51, 61, 71 (terminals B, C, D) (step S13). The second through fourth portable terminals 51, 61, 71 (terminals B, C, D) return a response to this request (step S14). Thus, a session is established among the terminals (step S15). Each of the portable terminals 41, 51, 61, 71 receives, from the PoC server 21, telephone numbers and other information of all the portable terminals included in the communication group and stores such information in its memory 3. Accordingly, after the session establishment, all the terminals are enabled to perform one-to-several and one-to-one PoC telephone call.

Upon receiving the session establishment response from the second through fourth portable terminals 51, 61, 71 (terminals B, C, D) in step S14, the PoC server 21 performs processing to transmit location information data (step S16). When the location information data is transmitted by the PoC server 21 (step S17), each of the second to fourth portable terminals 51, 61, 71 (terminals B, C, D) receives the location information data in step S18, and displays the location information of the first portable terminal device 41 (terminal A) on its display unit 8.

When similar PoC telephone call is performed from another portable terminal in the group after terminating the telephone call from the first portable terminal 41 (terminal device A), location information data of the portable terminal performing the PoC telephone call is transmitted and the location information of the source terminal is displayed on the display device of each destination terminal.

Although Fig. 4 shows an example in which the location information data is notified, the user of the source terminal device can determine and set himself/herself whether the location information data is to be sent or not from the viewpoint of personal information protection. For example, this user setting is enabled by providing a flag in the non-volatile memory 3 of the portable terminal, so that device control unit 4 checks this flag before transmitting the location information data. If the flag is ON, the device control unit 4 transmits the location information data via the transmission unit 5 and the communication antenna 7. If the flag is OFF, the transmission control unit 4 does not transmit the location information data but transmits dummy data. For another example, an identification number may be prepended to the destination telephone number to indicate whether or not the location information data is to be notified. This is the same technique as the technique of number display services conventionally used.

According to this embodiment, a user is able to notify his/her position only by calling a destination using a portable terminal having location information acquisition means. This makes it easy to identify who is the calling party (speaker). Further, when the source terminal user is traveling on business, for example, the user need not tell his/her current position, and can save the trouble of doing so. In addition, the notification can be sent simultaneously to a plurality of persons by using the PoC telephone call system.

The location information notification service system 10 is not limited to a GPS system but may be any other service system as long as it has location information notification means. For example, the location information data may be replaced with message text data, so that the message can be sent to a destination at the same time with a telephone call. Likewise, the text data may be replaced with music data or image data, so that the variety of service can be enlarged.

The portable terminal used in the embodiment above may be a portable telephone, a PHS (Personal Handyphone System), a PDA (Personal Data Assistance or Personal Digital Assistant), and, in particular, one having a location information notification function.

Although the present invention has been described on the basis of the preferred embodiment, the present invention is not limited to the configuration of the embodiment above. The configuration of the embodiment above may be otherwise variously changed or modified within the scope of present invention.

## Claims

1. A telephone calling method for use in a mobile communication system comprising one source portable terminal (41), a plurality of destination portable terminals (51, 61, 71), and a server (21, 22) for controlling one-to-several telephone call performed between said source portable terminal and said plurality of destination portable terminals, the method being **characterized by** comprising:
a step (2) in which said source portable terminal (41) intermittently acquires location information data of its own from a location information notification service system (10);
a step (5) in which said source portable terminal (41) transmits the acquired location information data of its own to said server (21, 22) at the timing of starting the transmission;
a step (6) in which said destination portable terminals (51, 61, 71) receive the location information data from said server (21, 22) having received the location information data at the timing of a session being established; and
a step (8) in which said destination portable terminals (51, 61, 71) display the location information of said source portable terminal (41) on their screens based on the location information data.

2. A communication method for use in a mobile communication system comprising one source portable terminal (41), a plurality of destination portable terminals (51, 61, 71), and a server (21, 22) for controlling one-to-several telephone call performed between said source portable terminal and said plurality of destination portable terminals, the method being **characterized by** comprising in said server (21, 22):
a step (S3, S5) of receiving from said source portable terminal (41) information identifying a destination or a destination group, at the timing of starting the transmission;
a step (S7) of identifying a telephone numbers of said destination portable terminals (51, 61, 71) based on the information identifying the destination or the destination group;
a step (S10) of receiving from said source portable terminal (41) location information data of said source portable terminal at the timing of starting the transmission;
a step (S13) of transmitting a session establishment request to the portable terminal (51, 61, 71) with the identified destination telephone number;
a step (S14) of receiving from the destination portable terminals (51, 61, 71) a signal in response to the session establishment request; and
a step (S16) of transmitting the location information data received from said source portable terminal (41) to said destination portable terminals (51, 61, 71).

3. A mobile communication system comprising one source portable terminal (41), a plurality of destination portable terminals (51, 61, 71), and a server (21, 22) for controlling one-to-several telephone call performed between said source portable terminal and said plurality of destination portable terminals, **characterized in that** said source portable terminal (41) comprises:
location information acquisition means (2) for intermittently acquiring location information data of the source portable terminal from a location information notification service system (10); and
transmission means (5) for transmitting to said server (21, 22) the location information data of the source portable terminal acquired by said location information acquisition means (2), at the timing of starting the transmission, and
each of said plurality of destination portable terminals (51, 61, 71) comprises:
reception means (6) for receiving the location information data from said server (21, 22) having received the location information data from said source portable terminal (41), at the timing of a session being established; and
image display means (8) for displaying on a screen thereof the location information of said source portable terminal (41) based on the location information data.

4. The mobile communication system according to claim 3, wherein the one-to-several telephone call is PoC (Push-to-Talk over Cellular) telephone call, and said transmission means (5) of said source portable terminal (41) transmits location information data of the source portable terminal (41) to said plurality of destination portable terminals (51, 61, 71) via said server (21, 22) when starting the PoC communication.

5. The mobile communication system according to claim 4, wherein said source portable terminal (41) further comprises determination means (3, 4) which enables or disables transmission of the location information data by said transmission means (5) at the timing of starting the PoC communication.

6. A mobile communication system comprising one source portable terminal (41), a plurality of destination portable terminals (51, 61, 71), and a server (21, 22) for controlling one-to-several telephone call performed between said source portable terminal and said plurality of destination portable terminals, **characterized in that** said server (21, 22) comprises:
reception means (211) for receiving from said source portable terminal (41) location information data of the source portable terminal and information identifying a destination or a destination group, at the timing of starting the transmission;
group management means (221) for identifying telephone numbers of the destination portable terminals based on the information identifying the destination or the destination group;
transmission means (213) which transmits a session establishment request to the portable terminals (51, 61, 71) with the identified destination telephone numbers and, when said reception means (211) receives a signal in response to the session establishment request from the destination portable terminals (51, 61, 71), transmits the location information data received from said source portable terminal (41) to said destination portable terminals (51, 61, 71); and
a telephone call control unit (212) for controlling telephone call between said source portable terminal and said plurality of destination portable terminals.

7. The mobile communication system according to claim 6, wherein the one-to-several telephone call is PoC (Push-to-Talk over Cellular) telephone call, and said server comprises a PoC server (21) and a GLMS (Group and List Management Server) server (22).

8. Program software for a computer for operating portable terminals (41, 51, 61, 71) in a mobile communication system comprising one source portable terminal (41), a plurality of destination portable terminals (51, 61, 71), and a server (21, 22) for controlling one-to-several telephone call performed between said source portable terminal and said plurality of destination portable terminals, the program software being **characterized by** causing the computer to execute the steps of:
acquiring intermittently from a location information service system (10) location information data of the source portable terminal;
transmitting the acquired location information data of the source portable terminal to said server (21, 22), at the timing of starting the transmission;
receiving the location information data from said server (21, 22) having received the location information data, at the timing of a session being established; and
displaying on a screen the location information of said source portable terminal (41) based on the location information data.

9. Program software for a computer for operating a server (21, 22) in a mobile communication system comprising one source portable terminal (41), a plurality of destination portable terminals (51, 61, 71), and a server (21, 22) for controlling one-to-several telephone call performed between said source portable terminal and said plurality of destination portable terminals, the program software being **characterized by** causing the computer to execute:
a step (S3, S5) of receiving from said source portable terminal (41) information identifying a destination or a destination group, at the timing of starting the transmission;
a step (S7) of identifying telephone numbers of the destination portable terminals (51, 61, 71) based on the information identifying the destination or the destination group;
a step (S10) of receiving from said source portable terminal (41) location information data of the source portable terminal, at the timing of starting the transmission;
a step (S13) of transmitting a session establishment request to the portable terminals (51, 61, 71) with the identified destination telephone numbers;
a step (S14) of receiving a signal in response to the session establishment request from said destination portable terminal (51, 61, 71); and
a step (S16) of transmitting the location information data received from said source portable terminal (41) to said destination portable terminals (51, 61, 71).

10. A portable terminal for use in a mobile communication system comprsing a server (21, 22) controlling one-to-several telephone call performed among three or more portable terminals (41, 51, 61, 71), said portable terminal being **characterized by** comprising:
location information acquisition means (2) for intermittently acquiring location information data of the portable terminal from a location information notification service system (10);
transmission means (5) for transmitting to said server (21, 22) the location information data of the portable terminal acquired by said location information acquisition means (2), at the timing of starting the transmission;
reception means (6) for receiving the location information data from said server (21, 22) having received the location information data from the source portable terminal (41), at the timing of a session being established; and
image display means (8) for displaying on a screen the location information of said source portable terminal (41) based on the location information data.

11. The portable terminal according to claim 10, wherein the one-to-several telephone call is PoC (Push-to-Talk over Cellular) telephone call, and said transmission means (5) transmits location information data of the source portable terminal to said server (21, 22) when starting the PoC communication.

12. The portable terminal according to claim 11, further comprising determination means (3, 4) which enables or disables transmission of the location information data by said transmission means (5) at the timing of starting the PoC communication.

13. A server (21, 22) for controlling one-to-several telephone call performed between one source portable terminal (41) and a plurality of destination portable terminals (51, 61, 71), comprising:,
reception means (211) for receiving from said source portable terminal (41) location information data of the source portable terminal device and information identifying a destination or a destination group, at the timing of starting the transmission;
group management means (221) for identifying telephone numbers of the destination portable terminals based on the information identifying the destination or the destination group;
transmission means (213) which transmits a session establishment request to said portable terminals (51, 61, 71) with the identified destination telephone numbers and, when the reception means (211) receives a signal in response to the session establishment request from said destination portable terminals (51, 61, 71), transmits the location information data received from said source portable terminal (41) to said destination portable terminals (51, 61, 71); and
a telephone call control unit (212) for controlling telephone callbetween said source portable terminal and said plurality of destination portable terminals.

14. The server according to claim 13, wherein the one-to-several telephone call is PoC (Push-to-Talk over Cellular) telephone call and said server comprises a PoC server (21) and a GLMS (Group and List Management Server) server (22).
